# EUROPÄISCHE PATENTSCHRIFT

(11) **EP 2 125 256 B1**
(45) Veröffentlichungstag und Bekanntmachung des Hinweises auf die Patenterteilung: **05.09.2018**
(21) Anmeldenummer: 08707342.5
(22) Anmeldetag: 28.01.2008
(51) Int. Cl.: B21B 31/07, F16J 15/32

(54) **ZAPFENDICHTUNG FÜR WALZENLAGER**
JOURNAL SEAL FOR ROLLING BEARINGS
GARNITURE D'ÉTANCHÉITÉ DE TOURILLONS POUR DES PALIERS DE CYLINDRE

(30) Priorität: 29.01.2007 DE 102007005155
(43) Veröffentlichungstag der Anmeldung: 02.12.2009
(73) Patentinhaber: SMS group GmbH, 40237 Düsseldorf (DE)
(72) Erfinder: KELLER, Karl, 57271 Hilchenbach (DE); ROEINGH, Konrad, 57271 Hilchenbach (DE); KNIE, Daniel, 57258 Freudenberg (DE)
(74) Vertreter: Klüppel, Walter
(86) Internationale Anmeldenummer: PCT/EP2008/000637
(87) Internationale Veröffentlichungsnummer: WO 2008/092616

(56) Entgegenhaltungen:
- EP-A- 0 297 323
- DE-A1- 3 601 238
- GB-A- 1 269 670
- GB-A- 2 174 463
- JP-Y- S 477 547
- US-A- 3 545 774
- US-A- 4 099 731

## Beschreibung

Die Erfindung betrifft eine Anordnung für ein Walzgerüst mit einer Walze mit einem Walzenzapfen und einer Zapfendichtung, wobei die Zapfendichtung aufweist:
- einen ringförmigen Dichtungskörper, der mit seiner koaxial zur Walzenachse ausgebildeten Auflagefläche drehfest mit einem Walzenzapfen verbunden ist und mit mindestens zwei von der Walzenachse weggerichteten, beabstandeten, Stegen ausgebildet ist, die direkt oder indirekt mit einem Ringansatz des Walzenlagers in Kontakt sind; und
- ein Bewehrungselement zur Verstärkung des Dichtungskörpers.

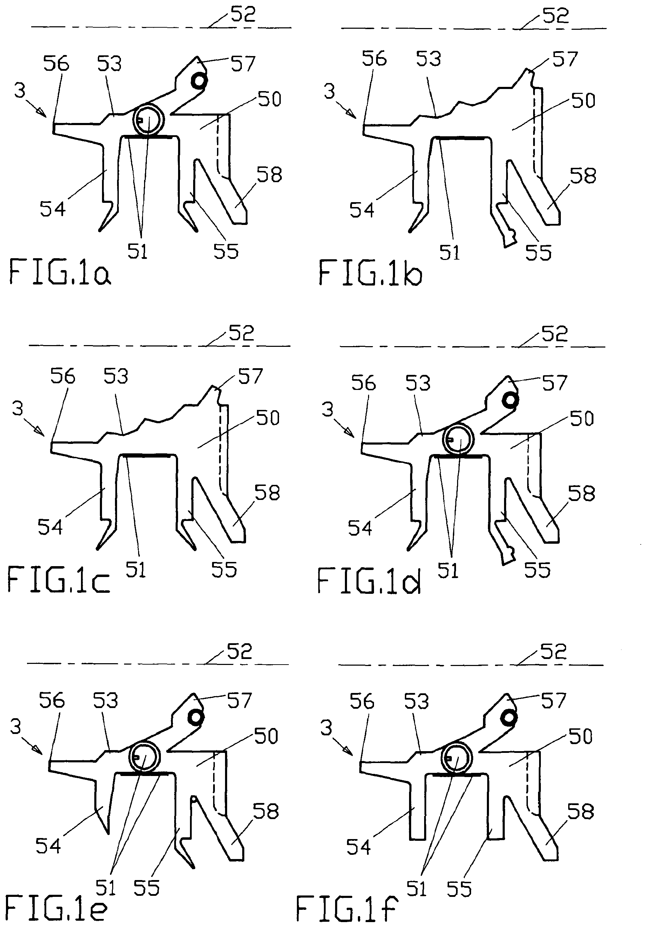

Zapfendichtungen dieser Art werden vorzugsweise zur Abdichtung von Walzenzapfenlagern in Walzenstraßen benutzt; sie sind dazu bestimmt, das Entweichen von Öl aus den Lagern zu verhindern und das Eindringen von Fremdkörpern, beispielsweise Kühlmittel oder Walzensinter in das Lager zu verhindern. Die hohen Drehzahlen der Walzen einer Walzstraße haben eine entsprechende Belastung der Lager und der Dichtungsvorrichtungen durch auftretende Zentrifugalkraftwirkungen zur Folge. Um den Einflüssen der Zentrifugalwirkung zu begegnen, werden die Dichtungskörper mit einem Bewehrungselement verstärkt. Das Bewehrungselement ist in dem Dichtungskörper eingelagert oder außen zwischen den beabstandeten Stegen angeordnet. Zapfendichtungen in verschiedenen Ausführungen sind entsprechend den Ausführungen gemäß den Figuren 1a bis 1f bekannt.

Aus der EP 1 625 897 B1 ist eine Dichtung für den sich verjüngenden Bereich eines Walzenzapfens eines Walzgerüsts bekannt. Die Dichtung weist auf einen flexiblen kreisförmigen Dichtungskörper mit einer zentralen Achse und mindestens einem sich radial nach außen erstreckenden Flansch, der über eine Verbindungsbrücke mit einer sich winklig erstreckenden Lippe verbunden ist, die zusammenlaufende erste und zweite Seiten aufweist. Die Verbindungsbrücke weist, verglichen mit der Dicke des Flansches und der Lippe, eine reduzierte Dicke auf. Die zusammenlaufenden ersten und zweiten Seiten der Lippe führen
zu einem vergrößerten Rand und die Lippe weist erste und zweite Außenflächen auf, die in einer Außenkante zusammen laufen, die in einer Referenzebene parallel zu zentralen Achse A liegt.

Aus der DE 36 01 238 C2 ist eine Dichtungsvorrichtung für Walzenlager bekannt, bei der der Walzenzapfen zwischen der Walzenstirnfläche und dem Lagerzapfen einen konischen Abschnitt aufweist, auf den ein ringförmiger, flexibler Dichtungskörper aufschiebbar ist, der an der der Walzenstirnseite zugewandten Ringseite eine, sich in axialer Richtung erstreckende Ringdichtungsrippe aufweist, wobei beim Aufschieben des Dichtungskörpers auf den konischen Walzenzapfenabschnitt durch den dabei wirksam werdenden radialen Druck, unter Aufbringen eines Biegemomentes die Ringdichtungslippe in eine, zur axialen Richtung geneigte, an der Außenfläche des konischen Walzenzapfenabschnitts anliegende Stellung gespannt wird. Der Dichtungskörper weist an seiner, die Außenfläche des konischen Abschnitts des Walzenzapfens zugewandten inneren Ringfläche, achsparallel versetzt gegenüber der Ringdichtungslippe Ringbundansätze auf, die unter dem axialen Druck auf den Dichtungskörper ein Biegemoment aufbringen, das dem auf die Ringdichtungslippe aufgebrachten Biegemoment entgegengerichtet ist.

Zapfendichtungen mit zwei Stegen, die mit Dichtlippen ausgebildet sind, und einem den Dichtungskörper stützenden Bewehrungselement sind aus DE 37 21 265 A1, EP 1 430 962 A1, EP 1 442 804 B1, EP 1 447 149 A2, WO 2005 / 037 455 A1 und US 4,099,731 bekannt.

Aus der JP S47 7547 Y und aus der GB 2 174 463 A sind Zapfendichtungen bekannt, die jeweils aus mehreren Einzelteilen bestehen, die ineinander gestreckt bzw. miteinander verbunden werden und aus unterschiedlichen Materialien bestehen.

Bei den bekannten Dichtungsvorrichtungen wurden folgende Nachteile festgestellt:
* Die außen aufgesetzte Bandage (=Bewehrungselement) aus Stahl muss auf beiden Seiten Spiel zu den Stegen haben, die die Dichtlippen tragen.
* Durch die konische Ausbildung des Walzenzapfens wird der Dichtungskörper beim Aufschieben und im anschließenden Betrieb durch die auftretenden ungleichen Fliehkräfte, hervorgerufen durch ungleiche Massenanordnung in axialer Richtung, in radialer Richtung unterschiedlich belastet.
* Beim Aufsetzen auf den Walzenzapfen verrutscht die Bandage einseitig, so dass die Stege sich in Folge schräg stellen. Ein reproduziertes Verhalten der Dichtung ist daher nicht gegeben.
* Die Ölschleuderlippe an der ölseitigen Dichtlippe kann sich so weit umbiegen, dass es zu Berührungen mit dem Laufdurchmesser der ölseitigen Dichtlippe kommt.
* Die Bandage, die durch Punkt- oder Stumpfschweißung gehalten wird, kann an der Schweißstelle aufreißen. Dadurch wirkt das dünne Stahlband dann wie ein Messer und zerschneidet beim Drehen der Walze die Gummidichtung (Totalausfall).
* Durch den Trend bei neuen Walzwerken, die Stützwalzen bei Verschleiß in den Einbaustücken nachzuschleifen, ist eine regelmäßige Kontrolle der Zapfendichtungen nur bei Herunternehmen der Baustücke vom Walzenzapfen möglich. Dies soll aber gerade vermieden werden. Dadurch müssen die Zapfendichtungen länger verlässlich laufen.
* Bandage verrutscht im Stand der Technik. Zapfenbuchse drückt auf Gummi, Gummi quillt raus; Lippe liegt nicht mehr gut an.
* Problem der Dichtung: Lebensdauer, Alterung wegen thermischer Beanspruchung (Reibungswärme), wird hart und rissig.

Der Erfindung liegt daher die Aufgabe zugrunde, für eine bekannte Walze in einem Walzgerüst das Bewährungselement innerhalb einer Zapfendichtung dahingehend weiterzubilden, dass die Dichtlippen der Zapfendichtung besser an einem Ringansatz anliegen.

Diese Aufgabe wird durch den Gegenstand des Anspruchs 1 gelöst. Dieser ist dadurch gekennzeichnet, dass in zunehmender axialer Erstreckung von der Walze das Bewährungselement eine zunehmend größere Steifigkeit aufweist.

Durch das im Dichtungskörper eingebettete Bewehrungselement, dessen axiale Erstreckung größer ist als der äußere Abstand der Stege, wird erreicht, dass beim Aufziehen / Aufschieben der Zapfendichtung und bei deren Rotation während des Walzens auf den Walzenzapfen kein Kippmoment auf die Stege wirkt. Es liegt somit eine weitestgehende Entkopplung zwischen dem die Stege aufweisenden Bereich der Zapfendichtung (von der Walzenachse weggerichtet) und dem Bereich der Zapfendichtung zwischen Bewehrungselement und der Auflagefläche (zur Walzenachse zeigend) vor.

Durch die beanspruchte besondere Ausgestaltung des Bewährungselementes wird erreicht, dass die - durch die in axialer Richtung ungleiche Verteilung der Masse des Dichtungskörpers - ungleichen radialen Fliehkräfte aufgefangen bzw. besser kompensiert werden. Dies hat wiederum vorteilhafterweise zur Folge, dass keine oder zumindest keine unsymmetrischen Kräfte oder Momente auf die Stege übertragen werden, wodurch eine betraglich gleichgroße Vorspannung der Dichtlippen der Stege gegenüber dem Ringansatz sichergestellt wird.

Gemäß einem ersten Ausführungsbeispiel dieser Bauweise wird vorgeschlagen, dass die mit dem Walzenzapfen in Kontakt befindlichen Auflageflächen jeweils symmetrisch zu den radialen Mittenebenen der Stege ausgebildet sind und die jeweils unabhängig voneinander ausgebildeten Auflageflächen so ausgestaltet sind, dass die radiale Verpressung des ringförmigen Dichtungskörpers so erfolgt, dass die Vorspannung der Stege und ihre Fortsetzung, die Dichtlippen, gegenüber dem Ringansatz gleich ist. Insbesondere werden keine unerwünschten Kippmomente auf die Stege und die dem Ringansatz zugeordneten Dichtlippen übertragen.

Die an dem Walzenzapfen anliegenden Auflageflächen des Dichtungskörpers werden geringfügig verdrängt. Das verdrängte Material des Dichtungskörpers wird aber entlang des Bewehrungselementes zumindest teilweise in einen Hohlraum verdängt, so dass keine Kräfte oder Momente auf die Stege einwirken. Die Lücke dient somit als kraftloser Auffangraum für das verdrängte Material.

Das zu verdrängende Material des Dichtungskörpers befindet sich dabei, in radialer Richtung gesehen, auf der dem Walzenzapfen zugewandten Seite, d.h. der den Stegen gegenüberliegenden Seite des Bewehrungselementes.
Die mit dem Walzenzapfen in Kontakt befindlichen Auflageflächen sind jeweils symmetrisch zu den radialen Mittenebenen der Stege ausgebildet. Durch eine derartige Ausgestaltung der Flächen wird erreicht, dass die radial nach außen wirkenden Kräfte auf das Bewehrungselement, über dessen Breite gesehen, gleich groß sind. Der Hohlraum befindet sich zwischen den beiden Flächen und ist so gestaltet, dass dem zu verdrängenden Material kein Widerstand entgegenwirkt. Der Hohlraum zeigt im Querschnitt beispielsweise die Form eines rechtwinkligen Dreiecks auf, dessen eine Kathete parallel zur Walzenachse ausgerichtet ist.

Als Ausgestaltung wird vorgeschlagen, dass - zusätzlich zu der beanspruchten Ausgestaltung des Bewehrungselementes - das jeweils zwischen dem Bewehrungselement (51) und der Auflagefläche (53-1, 53-2) befindliche Material des Dichtungskörpers (50) in zunehmender axialer Erstreckung von der Walze eine zunehmend größere Steifigkeit aufweist. Dadurch wird erreicht, dass die - durch die in axialer Richtung ungleiche Verteilung der Masse des Dichtungskörpers an dem konischen Walzenzapfen bedingten, an verschiedenen Achspositionen - ungleichen radialen Fliehkräfte aufgefangen beziehungsweise kompensiert werden. Dies hat wiederum vorteilhafterweise zur Folge, dass keine oder zumindest keine unsymmetrischen Kräfte oder Momente auf die Stege übertragen werden, wodurch eine betraglich gleichgroße Verspannung der Dichtlippen der Stege gegenüber dem Ringansatz sichergestellt wird.

Eine andere Vereinfachung wird außerdem auch dadurch erzielt, dass das Bewehrungselement aus Stahl, Stahlgewebe, Kunststoffgewebe, Kevlargewebe, Aramidfaser oder Karbonfaser besteht. Durch die Verwendung von Gewebe oder von Fasern kann die Herstellung eines Bewehrungselementes mit unterschiedlicher Steifigkeit vereinfacht werden, indem beispielsweise ein Bereich des Bewehrungselementes aus fünf Lagen und ein anderer Bereich aus acht Lagen gebildet werden.

Zu Verstärkung der Ränder des Bewehrungselementes kann vorgesehen sein, dieses mit zur Walzachse oder entgegen der Walzachse gerichtete, radiale Abwinklungen auszubilden. Der Querschnitt des Bewehrungselementes ist s-förmig oder u-förmig ausgebildet. Die Schenkel des u-förmigen Bewehrungselementes zeigen zur Walzenachse hin oder weg.

Weitere Ausgestaltungen der Vorrichtung ergeben sich aus den diesbezüglichen Unteransprüchen.

Ein Ausführungsbeispiel der Erfindung wird anhand einer sehr schematischen Zeichnung näher beschrieben. Es zeigt:
- Fig. 1a - 1f: im Querschnitt bekannte Dichtungsvorrichtungen;
- Fig. 2: in teilweise geschnittener Seitenansicht eine Dichtungsvorrichtung, aufweisend einen Dichtungskörper und einem den Dichtungskörper stützenden Bewehrungselement; und
- Fig. 3: im Querschnitt eine Ausführung der Dichtungsvorrichtung gemäß der Erfindung.

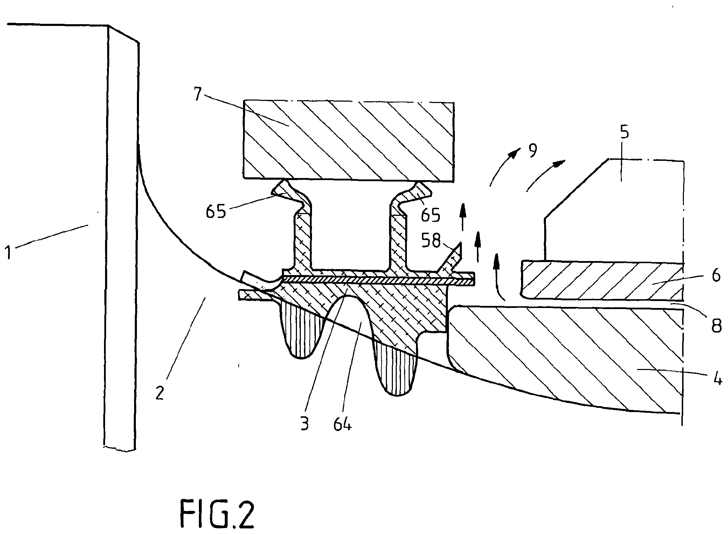

In den Figuren 1a bis 1f sind bekannte Zapfendichtungen 3 dargestellt, die einen Dichtungskörper 50 mit einem Bewehrungselement 51 aufweisen. Durch die Strich - Punkt - Linie ist die Lage einer Walzenachse 52 dargestellt. Die genaue Anordnung von Zapfendichtung, Walze usw. ist der Figur 2 zu entnehmen. Der Dichtungskörper 50 weist eine in Walzenachse 52 gerichtete Auflagefläche 53 und mindestens zwei von der Walzenachse 52 radial wegweisende Stege 54, 55 auf.

In Fig. 1a ist der Dichtungskörper 50 mit einem eingebetteten Bewehrungselement 51 in Form eines Drahtseils / einer Spiralfeder und einem zwischen den Stegen 54, 55 angeordnetem Bewehrungselement 51 in Form eines Metallbandes ausgebildet. Die Auflagefläche 53 erstreckt sich von einem linken Ende 56 zu einem rechen Ende 57 und weist eine Kontur auf, die an unterschiedlichen Stellen im eingebauten Zustand an dem Walzenzapfen (nicht dargestellt) anliegen. Das linke Ende 56 und das rechte Ende 57 weist ebenfalls unterschiedliche Konturen auf, eine Verstärkung des rechten Endes 57 in Form eines weiteren Bewehrungselementes ist dargestellt. Weiterhin befindet sich rechts von dem Steg 55 eine Schleuderlippe 58, die das aus dem Spalt zwischen Zapfenbuchse und Lagerbuchse 6 (siehe Figur 2) austretende Öl ablenkt.

An den Stegen 54, 55 sind Dichtlippen ausgebildet, die in Figur 1b unterschiedliche Formen aufweisen. Der hier gezeigte Dichtungskörper 50 hat kein eingebettetes Bewehrungselement sondern nur ein zwischen den Stegen 54, 55 angeordnetes Bewehrungselement 51.
Figur 1c zeigt eine Zapfendichtung 3 wie in Figur 1b, die Stege 54, 55 sind mit spiegelbildlich ausgebildeten Dichtlippen bestückt.
Figur 1d zeigt die Ausgestaltung einer Zapfendichtung 3 nach Figur 1b mit den Bewehrungselementen 51 aus Figur 1a.
Figur 1e zeigt die Ausführung nach Figur 1a, wobei die Steg 54 verändert ist.
Figur 1f zeigt die Ausführung einer Zapfendichtung 3, bei der die Stege 54, 55 keine Dichtlippen aufweisen.

In Figur 2 ist in teilweise geschnittener Seitenansicht eine Walze 1 mit einem Walzenzapfen 2 dargestellt. Auf den Walzenzapfen 2 ist eine Zapfendichtung 3 mittels einer Zapfenbuchse 4, die drehfest auf den Walzenzapfen 2 aufgebracht ist, aufgeschoben. Die Zapfenbuchse 4 hält die ringförmige Zapfendichtung 3 in Position. Der Walzenzapfen 2 mit der drehfest aufgebrachten Zapfenbuchse 4 sind in einem Lagergehäuse 5 mit Lagerbuchse 6 angeordnet. Zwischen der sich drehenden Zapfenbuchse 4 und der feststehenden Lagerbuchse 6 befindet sich ein Spalt 8, durch den ein Schmiermittel gefördert wird, welches durch einen Abflussraum 9 aus diesem Bereich des Lagers entfernt wird. Zur Ablenkung des Öls in eine bestimmte Richtung ist eine Schleuderlippe 58 an der Zapfendichtung 3 ausgebildet.

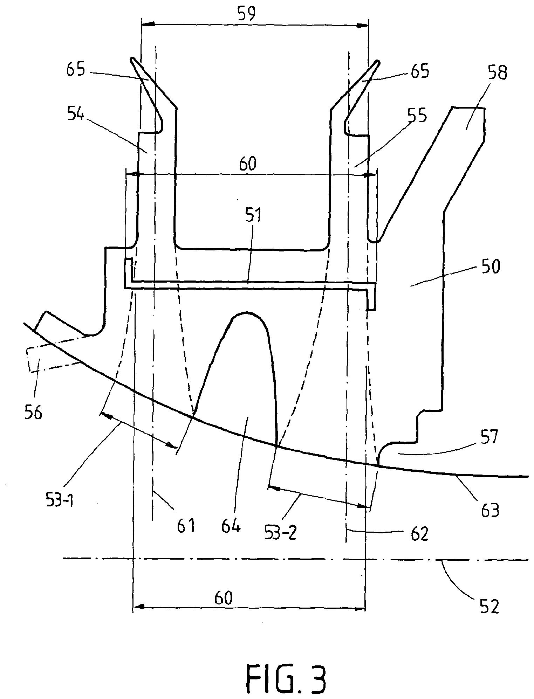

In Figur 3 ist im Querschnitt eine Ausführung der Dichtungsvorrichtung gemäß der Erfindung dargestellt. Das Bewehrungselement 51 ist in seiner Breite 60 größer als der äußere Abstand 59 der Stege 54 und 55. Die Dichtungslippe 56 des Dichtungskörpers 50 ist derart elastisch ausgebildet, dass sie vom Ausgangszustand (gestrichelt dargestellt) ohne größeren Krafteinsatz in ihren Einbauzustand gebracht werden kann. Die Dichtungslippe 57 des Dichtkörpers 50 kann beispielsweise derart ausgebildet sein, wie aus den Figuren 1a bis 1f bekannt. Die Auflageflächen 53-1 und 53-2 des ringförmigen Dichtungskörpers 50 sind durch einen umlaufenden Hohlraum 64 voneinander getrennt und können jeweils unabhängig voneinander ausgebildet werden. Dabei werden die Anpresskräfte für die darüber liegenden Stege 54 und 55 mit den anhängenden Dichtlippen 65 so eingestellt, dass die beiden Dichtlippen 65 jeweils die gleiche Vorspannkraft gegenüber dem am Lager befindlichen Ringansatz 7 (siehe Figur 2) haben. Die Auflageflächen 53-1 und 53-2 sind jeweils symmetrisch zur jeweiligen Mittenachse 61 oder 62 der Stege 54 oder 55 angeordnet.

In zunehmender axialer Entfernung von der Walze weist das Bewehrungselement eine zunehmend größere Steifigkeit auf, zusätzlich kann auch das jeweils zwischen dem Bewehrungselement 51 und der Auflagefläche 53-1, 53-2 befindliche Material des Dichtungskörpers (50) eine zunehmend größere Steifigkeit aufweisen. Dies kann z.B. durch die Verwendung von Materialien mit unterschiedlichen E-Modulen erreicht werden.

### Bezugszeichenliste

- 1.: Walze
- 2.: Walzenzapfen
- 3.: Zapfendichtung
- 4.: Zapfenbuchse
- 5.: Lagergehäuse
- 6.: Lagerbuchse
- 7.: Ringansatz
- 8.: Spalt
- 9.: Abflussraum
- 50: Dichtungskörper
- 51: Bewehrungselement
- 52: Walzenachse
- 53: Auflagefläche
- 54: Steg
- 55: Steg
- 56: Dichtlippe
- 57: Dichtlippe
- 58: Schleuderlippe
- 59: Abstand
- 60: Breite
- 61: Mittenachse
- 62: Mittenachse
- 63: Kontur
- 64: Hohlraum
- 65: Dichtlippen

## Patentansprüche

1. Anordnung für ein Walzgerüst mit:
- einer Walze (1) mit einem Walzenzapfen (2); und
- einer Zapfendichtung für das Lager der Walze in dem Walzgerüst, wobei die Zapfendichtung aufweist:
- einen ringförmigen Dichtungskörper (50), der mit seiner koaxial zur Walzenachse (52) ausgebildeten Auflagefläche (53) drehfest mit dem Walzenzapfen (2) verbunden ist und mit mindestens zwei von der Walzenachse (52) weggerichteten, beabstandeten, Stegen (54, 55) ausgebildet ist, die direkt oder indirekt mit einem Ringansatz (7) in Kontakt gebracht werden können; und
- ein Bewehrungselement (51) zur Verstärkung des Dichtungskörpers (50), wobei
das Bewehrungselement (51) eine Breite (60) aufweist, die größer ist als der äußere Abstand (59) der beiden Stege (54, 55), und vollständig oder teilweise in dem Dichtungskörper (50) eingebettet ist;
**dadurch gekennzeichnet,**
**dass** in zunehmender axialer Erstreckung von der Walze (1) das Bewehrungselement (51) eine zunehmend größere Steifigkeit aufweist.

2. Anordnung nach Anspruch 1
**dadurch gekennzeichnet,**
**dass** die mit dem Walzenzapfen (2) in Kontakt befindlichen Auflageflächen (53-1, 53-2) jeweils symmetrisch zu den radialen Mittenebenen (61, 62) der Stege (54, 55) ausgebildet sind und die jeweils unabhängig voneinander ausgebildeten Auflageflächen (53-1, 53-2) so ausgestaltet sind, dass die radiale Verpressung des ringförmigen Dichtungskörpers (50) so erfolgt, dass die Vorspannung der Stege (54, 55) und ihre Fortsetzung, die Dichtlippen (65), gegenüber dem Ringansatz (7) gleich ist und keine Kippmomente auf die Stege (54, 55) wirken.

3. Anordnung nach einem der Ansprüche 1 bis 2,
**dadurch gekennzeichnet,**
**dass** das Bewehrungselement (51) aus Stahl, Stahlgewebe, Kunststoffgewebe, Kevlargewebe, Aramidfaser oder Karbonfaser besteht.

4. Anordnung nach einem der Ansprüche 1 bis 3,
**dadurch gekennzeichnet,**
**dass** das Bewehrungselement (51) mindestens an einem Ende radial abgewinkelt ist.

5. Anordnung nach Anspruch 4,
**dadurch gekennzeichnet,**
**dass** das Bewehrungselement (51) im Querschnitt s-förmig oder u-förmig ausgebildet ist.

6. Anordnung nach einem der Ansprüche 1 bis 5,
**dadurch gekennzeichnet,**
**dass** das Bewehrungselement (51) perforiert ist.

## Claims

1. Arrangement for a roll stand, comprising:
- a roll (1) with a roll pin (2); and
- a pin seal for the bearing of the roll in the roll stand, wherein the pin seal comprises:
- an annular sealing body (50) which is connected by its support surface (53), which is formed to be coaxial with the roll axis (52), with the roll pin (2) to be secure against relative rotation and is formed with at least two spaced-apart webs (54, 55) which are directed away from the roll axis (52) and can be brought directly or indirectly into contact with an annular projection (7); and
- a reinforcing element (51) for reinforcing the sealing body (50),
wherein the reinforcing element (51) has a width (60), which is greater than the outer spacing (59) of the two webs (54, 55), and is completely or partly embedded in the sealing body (50);
**characterised in that** the reinforcing element (51) has an increasingly greater stiffness with increasing axial length from the roll (1).

2. Arrangement according to claim 1, **characterised in that** the support surfaces (53-1, 53-2) disposed in contact with the roll pin (2) are each formed symmetrically with respect to the radial centre plane (61, 62) of the webs (54, 55) and the support surfaces (53-1, 53-2) which are formed independently of one another, are so shaped that the radial pressing of the annular sealing body (50) takes place in such a way that the biasing of the webs (54, 55) and the continuation thereof, i.e. the sealing lips (65), relative to the annular projection (7) is the same and no canting moments act on the webs (54, 55).

3. Arrangement according to one of claims 1 and 2, **characterised in that** the reinforcing element (51) consists of steel, steel fabric, plastics material fabric, Kevlar fabric, aramide fibre or carbon fibre.

4. Arrangement according to any one of claims 1 to 3, **characterised in that** the reinforcing element (51) is radially bent at least at one end.

5. Arrangement according to claim 4, **characterised in that** the reinforcing element (51) is formed to be S-shaped or U-shaped in cross-section.

6. Arrangement according to any one of claims 1 to 5, **characterised in that** the reinforcing element (51) is perforated.

## Revendications

1. Agencement pour une cage de laminoir comprenant :
- un cylindre (1) comprenant un tourillon de cylindre (2) ;
- un joint d'étanchéité de tourillon pour le palier du cylindre dans la cage de laminoir, le joint d'étanchéité de tourillon présentant :
un corps annulaire de joint d'étanchéité (50) qui est relié de manière fixe en rotation avec le tourillon de cylindre (2) avec sa surface d'appui (53) coaxiale par rapport à l'axe (52) du cylindre et qui est réalisé avec au moins deux entretoises (54, 55) espacées l'une de l'autre dans une direction de l'axe (52) du cylindre, qui peuvent être mises de manière directe ou de manière indirecte en contact avec une saillie annulaire (7) ; et
- un élément (51) faisant office d'armature pour le renforcement du corps de joint d'étanchéité (50) ;
dans lequel l'élément (51) faisant office d'armature présente une largeur (60) qui est supérieure à l'écartement externe (59) des deux entretoises (54, 55) et est incorporé de manière complète ou de manière partielle dans le corps de joint d'étanchéité (50) ;
**caractérisé en ce que** l'élément (51) faisant office d'armature présente une rigidité croissante avec une distance axiale par rapport au cylindre (1) qui s'accroît.

2. Agencement selon la revendication 1, **caractérisé en ce que** les surfaces d'appui (53-1, 53-2) qui entrent en contact avec le tourillon de cylindre (2) sont réalisées respectivement de manière symétrique par rapport aux plans médians radiaux (61, 62) des entretoises (54, 55) et les surfaces d'appui (53-1, 53-2) réalisées de manière respectivement indépendante sont conçues d'une manière telle que la compression radiale du corps annulaire de joint d'étanchéité (50) a lieu d'une manière telle que la précontrainte des entretoises (54, 55) et de leur prolongement, les lèvres d'étanchéité (65), est égal par rapport à la saillie annulaire (7) et qu'aucun moment de renversement ne s'exerce sur les entretoises (54, 55).

3. Agencement selon l'une quelconque des revendications 1 à 2, **caractérisé en ce que** l'élément (51) faisant office d'armature est constitué d'acier, d'un tissu en acier, d'un tissu en matière synthétique, d'un tissu en kevlar, de fibres d'aramide ou de fibres de carbone.

4. Agencement selon l'une quelconque des revendications 1 à 3, **caractérisé en ce que** l'élément (51) faisant office d'armature forme un angle en direction radiale au moins à une extrémité.

5. Agencement selon la revendication 4, **caractérisé en ce que** l'élément (51) faisant office d'armature est réalisé en forme de S ou en forme de U en section transversale.

6. Agencement selon l'une quelconque des revendications 1 à 5, **caractérisé en ce que** l'élément (51) faisant office d'armature est perforé.
